**Europäisches Patentamt**

(19) **European Patent Office**

**Office européen des brevets**

(11) Numéro de publication : **0 450 989 A1**

(12) # DEMANDE DE BREVET EUROPEEN

(21) Numéro de dépôt : **91400277.9**

(51) Int. Cl.⁵ : **C01B 33/32, C11D 3/08**

(22) Date de dépôt : **06.02.91**

(30) Priorité : **16.02.90 FR 9001874**

(43) Date de publication de la demande :
**09.10.91 Bulletin 91/41**

(84) Etats contractants désignés :
**AT BE CH DE DK ES FR GB GR IT LI LU NL SE**

(71) Demandeur : **RHONE POULENC CHIMIE**
**25 Quai Paul Doumer**
**F-92408 Courbevoie Cédex (FR)**

(72) Inventeur : **Lehoux, Jean-Luc**
**56 Rue Louis Auguste Blanqui**
**F-93140 Bondy (FR)**
Inventeur : **Le Roux, Jérôme**
**Eschengasse No. 6; Wilfersdorf**
**A-3434 Autriche (AT)**

(74) Mandataire : **Fabre, Madeleine-France et al**
**RHONE-POULENC CHIMIE Service Brevets**
**Chimie 25, quai Paul Doumer**
**F-92408 Courbevoie Cédex (FR)**

(54) **Granulés sphériques de silicates hydratés de métaux alcalins, leur procédé de préparation et leur application dans les compositions détergentes.**

(57) Procédé de préparation de granulés de silicates hydratés de métaux alcalins par pulvérisation d'eau ou d'une solution aqueuse de silicates de métaux alcalins sur un lit roulant des particules de silicates hydratés de métaux alcalins défilant en couche mince dans un dispositif du type assiette tournante laissé à température ambiante, densification éventuelle des granulés obtenus puis séchage.
Utilisation des granulés obtenus dans les compositions détergentes ou le traitement des eaux.

EP 0 450 989 A1

# GRANULES SPHERIQUES DE SILICATES HYDRATES DE METAUX ALCALINS, LEUR PROCEDE DE PREPARATION ET LEUR APPLICATION DANS LES COMPOSITIONS DETERGENTES

La présente invention a pour objet des granulés sphériques de silicates hydratés de métaux alcalins, leur procédé de préparation et leur application dans les compositions détergentes, notamment pour lave-vaisselle ou lave-linge ainsi que pour le traitement des eaux.

La demanderesse a trouvé des granulés sphériques de silicates hydratés de métaux alcalins dont la granulométrie et la densité peuvent être réglées à volonté, de faible attrition, présentant une bonne coulabilité et une vitesse rapide de solubilisation dans l'eau.

Un premier objet de la présente invention consiste en un procédé de préparation de granulés sphériques de silicates hydratés de métaux alcalins par granulation de particules de silicates hydratés de métaux alcalins par pulvérisation d'eau ou d'une solution aqueuse de silicates de métaux alcalins sur un lit roulant desdites particules, puis séchage, ledit procédé étant caractérisé en ce que :

– l'opération de pulvérisation est réalisée sur des particules défilant en couche mince à température ambiante dans un dispositif rotatif du type assiette tournante dont l'axe de rotation est incliné par rapport à l'horizontale selon un angle supérieur à 20 °, de préférence supérieur à 40 °, la vitesse de défilement des particules, l'épaisseur de la couche mince de particules en défilement et le débit d'eau ou de solution pulvérisée étant tels que chaque particule se transforme en un granulé plastique en entrant en contact avec d'autres particules,

– l'opération de granulation par pulvérisation est éventuellement suivie, et ce avant séchage, d'une opération de densification à température ambiante.

Parmi les silicates de métaux alcalins on peut citer ceux des métaux du groupe Ia de la classification périodique et tout particulièrement ceux de sodium et de potassium.

La solution aqueuse de silicate pulvérisée peut présenter une concentration de l'ordre de 0 à 55 % en poids, de préférence de 30 à 45 % en poids, d'un silicate de métal alcalin présentant un rapport molaire $SiO_2/M_2O$ pouvant aller de 1,6/1 à 5/1, généralement de l'ordre de 1,8/1 à 3,5/1 et tout particulièrement voisin de 2/1.

La pulvérisation de l'eau ou de la solution de silicate est réalisée à une température de l'ordre de 20 à 95°C, de préférence de l'ordre de 70 à 95°C ; celle-ci peut être favorisée par introduction conjointe (par exemple à l'aide d'une buse bifluide) d'air sous pression à une température du même ordre.

La quantité d'eau ou de solution à pulvériser correspond au rapport débit de liquide/débit des particules entrant dans le dispositif du type assiette tournante pouvant aller de 0,1 à 0,6 l/kg, de préférence de 0,15 à 0,25 l/kg (pour une heure).

Les particules de silicate hydraté de métal alcalin mises en oeuvre pour préparer les granulés présentent :

– un rapport molaire $SiO_2/M_2O$ de l'ordre de 1,6/1 à 5/1, généralement de l'ordre de 1,8/1 à 3,5/1 et tout particulièrement de l'ordre de 2/1,

– une teneur en eau de 15 à 30 % en poids, de préférence de l'ordre de 18 à 25 % en poids,

– une densité de remplissage non tassé (non bulk density) de l'ordre de 0,3 à 1 g/cm³, de préférence de l'ordre de 0,4 à 0,8 g/cm³ ; 50 % en poids desdites particules présentant un diamètre inférieur à 100 µm, de préférence inférieur à 55 µm.

Ces particules peuvent être obtenues par tout procédé connu, notamment par séchage par atomisation d'une solution aqueuse de silicate de même rapport $SiO_2/M_2O$, puis broyage si nécessaire.

Le dispositif mis en oeuvre pour réaliser l'opération de granulation par pulvérisation peut être tout dispositif rotatif du type assiette tournante, notamment un drageoir dont la géométrie peut être très diverse : tronconique, plat, en escalier, une combinaison de ces trois formes... Les particules de silicate hydraté défilent à température ambiante (généralement 15-30°C) dans ledit dispositif laissé à température ambiante.

Le débit de l'eau ou de la solution pulvérisée, la vitesse de défilement des particules ainsi que l'épaisseur de la couche de particules en défilement sont tels que chaque particule absorbe du liquide et s'agglomère aux autres particules avec lesquelles elle entre en contact et ce selon une couche mince afin d'obtenir des granulés plastiques et non une pâte.

La vitesse de défilement des particules et l'épaisseur de la couche sont réglées par le débit d'introduction des particules dans le dispositif et par les caractéristiques de ce dernier.

Le temps de séjour des particules dans l'assiette est généralement de l'ordre de 15 à 40 minutes.

Il est à la portée de l'homme de métier, en fonction d'une matière première donnée, d'adapter au produit désiré les caractéristiques suivantes d'un drageoir :

. géométrie (tronconique, plat, en escalier, ou combinaison des trois formes),

. dimensions (profondeur, diamètre),

. angle d'inclinaison,

. vitesse de rotation,

. positions relatives des alimentations en solide et en liquide.

Les granulés obtenus avant séchage présentent des caractéristiques fonction des conditions mises en oeuvre pour réaliser la granulation. Ils présentent généralement :

– un rapport $SiO_2/M_2O$ de l'ordre de 1,6/1 à 5/1, généralement de l'ordre de 1,8/1 à 3,5/1 et tout particulièrement voisin de 2/1,

– une teneur en eau de l'ordre de 20 à 35 % en poids, de préférence de l'ordre de 25 à 30 % en poids.

Les granulés sont alors séchés par tout moyen connu. Une méthode particulièrement performante est le séchage en lit fluidisé à l'aide d'un courant d'air à une température (fonction de l'humidité de ce dernier) de l'ordre de 50 à 150°C, de préférence de 60 à90°C. Cette opération est réalisée pendant une durée fonction de l'humidité de l'air, de la teneur en eau des granulés à la sortie du dispositif de granulation et de celle désirée des granulés de silicate séchés, ainsi que des conditions de fluidisation ; l'homme de métier sait adapter ces différentes conditions au produit recherché.

Les granulés secs présentent généralement:

– une teneur en eau de l'ordre de 17 à 25 % en poids, de préférence de l'ordre de 18 à 23 % en poids,

– une densité de remplissage non tassé de l'ordre de 0,3 à 1 g/cm³, de préférence de l'ordre de 0,4 à 0,8 g/cm³,

– un diamètre médian (au sens des pourcentages cumulés passants) de l'ordre de 0,2 à 3 mm, de préférence de l'ordre de 0,4 à 2,5 mm, tout particulièrement de l'ordre de 0,5 à 1 mm, avec un écart type $log_{10}$ de 0,02 à 0,2, de préférence de 0,05 à 0,1.

Selon un perfectionnement dudit procédé l'opération de granulation est suivie d'une opération de densification et ce avant séchage. Ladite opération de densification peut être réalisée à température ambiante par roulement des granulés obtenus à l'étape de granulation dans un dispositif rotatif.

Ce dispositif est de préférence indépendant de celui de granulation. Cette étape de densification peut par exemple être réalisée par introduction et séjour des granulés dans un tambour rotatif. Les dimensions de ce tambour, sa vitesse de rotation et le temps de séjour des granulés sont fonction de la densité désirée des granulés ; le temps de séjour est généralement de l'ordre de 20 minutes à 3 heures, de préférence de l'ordre de 20 à 90 minutes. Les opérations de granulation et de densification peuvent également être réalisées dans le même dispositif, par exemple dans un drageoir en escalier, la densification des granulés étant obtenue par roulement desdits granulés sur les dernières marches de l'appareil.

Les granulés denses obtenus sont ensuite séchés, de préférence en lit fluidisé comme ci-dessus indiqué.

Les granulés denses séchés présentent :

– un rapport $SiO_2/M_2O$ de l'ordre de 1,6/1 à 5/1, généralement de l'ordre de 1,8/1 à 3,5/1 et tout particulièrement voisin de 2/1,

– une teneur en eau de l'ordre de 17 à 25 % en poids, de préférence de l'ordre de 18 à 23 % en poids,

– une densité de remplissage non tassé de l'ordre de 0,6 à 1,2 g/cm³, de préférence de l'ordre de 0,8 à 1 g/cm³,

– un diamètre médian (au sens des pourcentages cumulés passants) de l'ordre de 0,2 à 3 mm, de préférence de l'ordre de 0,5 à 1 mm, avec un écart type $log_{10}$ de 0,02 à 0,2, de préférence de 0,05 à 0,1.

Les étapes de granulation/séchage ou de granulation/densification/séchage selon le procédé de l'invention permettent d'obtenir des granulés de silicates hydratés de métaux alcalins denses et se dissolvant rapidement dans l'eau. Ils sont particulièrement aptes à être utilisés pour la confection de compositions détergentes (pour lave-vaisselle, lave-linge...), pour le traitement des eaux..

Un deuxième objet de l'invention consiste en des granulés de silicates hydratés de sodium particulièrement adaptés à la préparation de composition détergente pour lave-vaisselle.

Il s'agit de granulés de silicate hydraté de sodium présentant les caractéristiques suivantes :

– rapport molaire $SiO_2/Na_2O$ de l'ordre de 1,8 à 2,4 et tout particulièrement de l'ordre de 2/1,

– une teneur en eau de 18 à 23 % en poids,

– une densité de remplissage non tassé de l'ordre de 0,8 à 1 g/cm³,

– un diamètre médian de l'ordre de 0,4 à 1,4 mm, de préférence de l'ordre de 0,5 à 1 mm avec un écart type $log_{10}$ de 0,05 à 0,1,

– une vitesse de dissolution à 90 % dans l'eau de l'ordre de 3 minutes et à 99 % de l'ordre de 4 minutes.

– une résistance à l'attrition de l'ordre de 1 à 6 %, généralement de l'ordre de 1 à 3 %.

On entend par vitesse de dissolution à 90 % ou 99 % dans l'eau, le temps nécessaire pour dissoudre 90 % ou 99 % de produit à une concentration de 35 g/l dans de l'eau à 20°C.

La résistance à l'attrition est mesurée par élutriation. On place le produit à tester dans une enceinte parcourue par un courant d'air, qui le fluidise. Les grains sont soumis à des chocs, entre eux et sur les parois. Les particules fines crées sont envolées et récupérées pour pesée au sommet de l'appareillage. (Le détail de la méthode est donnée à l'exemple 1).

Les granulés de silicate de sodium hydraté de l'invention sont mis en oeuvre dans les compositions détergentes pour lave-vaisselle à rai son de 20 à 60 % en poids, de préférence de 30 à 50 % en poids desdites compositions.

Les exemples suivants sont donnés à titre indicatif et ne peuvent être considérés comme une limite du domaine et de l'esprit de l'invention.

## EXEMPLE 1

Le système de granulation est constitué d'une assiette plate de diamètre 800 mm et de profondeur 100 mm. Lors de la granulation la vitesse de rotation est de l'ordre de 30 tr/mn et l'inclinaison de l'axe de rotation par rapport à l'horizontal est de l'ordre de 53°. L'assiette à granuler est alimentée en continu à un débit de 25 kg/h par une poudre constituée de fines particules de silicate de sodium (atomisé et broyé) dont les caractéristiques principales sont les suivantes :
- Rapport $SiO_2/Na_2O$ (en poids) = 2
- teneur en eau (en poids) = 18,2 %
- densité de remplissage non tassé = 0,45 g/cm3
- diamètre médian = 54 μm
- 99 % (en poids) du produit se dissout en 180 s (solution aqueuse à 35 g/l à 20° C)
- température ambiante

Sur cette poudre amenée en rotation dans l'assiette à granuler est pulvérisée à l'aide d'air à 80° C un solution de silicate de sodium à un débit de 5 1/h à une température de 80° C par l'intermédiaire d'une buse bi-fluide située à une distance de 20 cm du fond du drageoir. Le taux de matière active et le rapport $SiO_2/Na_2O$ de la solution pulvérisée sont respectivement 45 % (en poids) et 2 (en poids).

Le temps de séjour moyen d'une particule dans l'assiette est d'environ 15 mn. La température des particules en sortie d'assiette est la température ambiante.

Les granulés ainsi obtenus sont séchés dans un lit fluidisé à une température de l'ordre de 65° C (température de l'air de fluidisation égale à 70° C) pendant 10 mn.

le produit granulé ainsi séché présente les caractéristiques suivantes :
- rapport $SiO_2/Na_2O$ (en poids) = 2
- teneur en eau (en poids) = 22,2 %
- densité de remplissage non tassé = 0,58 g/cm3
- % en poids de refus à 1mm = 60 %
- diamètre médian = 1,1 mm
- % en poids de passant à 0,2 mm = 0 %
- 99 % (en poids) du produit se dissout en 200 s (solution aqueuse à 35 g/l à 20° C)
- résistance à l'attrition : 5,5 %

Les granulés présentent une excellente tenue au stockage.

## Mesure de la résistance à l'attrition

Matériel :

On utilise le flouromètre, appareil normalisé utilisé pour qualifier les liants hydrauliques et décrits dans la norme Française P 15-443.

Mode opératoire :

Tamiser 50g de produit entre les tamis 1200 et 180 microns, à l'aide d'une tamiseuse de laboratoire ROTO-LAB ® (commercialisée par PROLABO).

Récupérer la partie comprise entre 180 et 1200 microns.

Peser environ exactement 25 g du produit à tester ; soit M la masse exacte.

Les placer dans le flouromètre.

Peser un filtre de type Soxlhet ® (commercialisé par PROLABO) vide et sec et le placer à la partie supérieure du tube de fluidisation ; soit M1 sa masse.

Fluidiser pendant 5 mn (débit d'air sec : 15 l/mn).

Récupérer le produit envolé dans le filtre ainsi que les fines éventuellement déposées sur les parois verticales du tube de fluidisation, à l'aide d'un écouvillon de diamètre adapté. Peser ; soit M2 la masse de ces fines et du filtre.

Tamiser à nouveau sur ROTO LAB ® le résidu dans le fond du tube de fluidisation et récupérer, pour pesée, les fines inférieures à 180 microns ; soit M3 la masse de ces fines.

Calcul. Expression des résultats :

Le taux d'attrition est égal au pourcentage de fines < 180 microns formé pendant le temps de fluidisation du produit.

$$\text{Attrition \%} = \frac{(M3 + M2\text{-}M1) \times 100}{M}$$

EXEMPLE 2

La granulation est réalisée selon les conditions décrites dans l'exemple 1. Les granulés sortie assiette sont introduits avant séchage dans un tube tournant à parois lisses de diamètre 500 mm et de longueur 1300 mm. Le diaphragme de sortie est ajusté de telle façon que le temps de séjour moyen d'une particule soit d'environ 1,5 h. La vitesse de rotation du tambour (15 tr/mm) est choisie de façon à avoir un lit roulant de particules, ce qui favorise la densification de ces dernières.

Le produit granulé densifié issu de cette opération est séché dans les conditions décrites dans l'exemple 1.

Les granulés finaux ainsi obtenus présentent les mêmes caractéristiques que ceux de l'exemple 1 à l'exception de la densité qui dans ce cas atteint une valeur de 0,83 g/cm3 et la résistance à l'attrition de 1,5 %.

EXEMPLE 3

En utilisant une poudre fine de silicate de sodium de même caractéristiques que celle de l'exemple 1 mais avec une densité plus élevée ( 0,55 g/cm3), les granulés obtenus selon la méthode de préparation décrite dans l'exemple 2 présentent une densité plus élevée de l'ordre de 0,93 g/cm3, les autres caractéristiques du granulés restant par ailleurs inchangées.

EXEMPLE 4

L'influence de la qualité de la pulvérisation sur la qualité des granulés a été étudiée en utilisant la matière première de l'exemple 3. La finesse et l'homogénéisation de la pulvérisation sont améliorées en modifiant la pression d'air de pulvérisation au sein de la buse.

L'augmentation de la pression d'air de pulvérisation permet par exemple de diminuer la granulométrie des granulés préparés dans les conditions de l'exemple 2 sans modifier les autres caractéristiques de ces derniers.

Les résultats obtenus sur une buse Schlick de type 932 sont les suivants :

| | | |
|---|---|---|
| Pression air (bar) | 0,4 | 0,8 |
| % refus à 1 mm | 60 | 25,5 |
| Diamètre médian (mm) | 1,1 | 0,88 |
| % passant à 0,2 mm | 0 | 0 |

EXEMPLE 5

Cet essai a pour but de montrer que le procédé de l'invention permet, à partir de particules de vitesse de dissolution dans l'eau médiocre, d'obtenir des granulés dont les caractéristiques de solubilisation dans l'eau sont améliorées de façon significative par rapport à celles desdites particules.

Les conditions de préparation de l'exemple 2 appliquées à une poudre fine de silicate de sodium ayant les caractéristiques suivantes ;

– rapport $SiO_2/Na_2O$ (en poids) = 1,95

– teneur en eau (en poids) = 20,2 %

– densité de remplissage non tassé = 0,55 g/cm3

– diamètre médian = 54 µm

– vitesse de dissolution assez médiocre (99 % en poids du produit se dissout en 560 s - solution aqueuse à 35 g/l à 20° C -)

ont permis d'obtenir des granulés denses ayant une meilleure vitesse de dissolution que la poudre de départ.

Les caractéristiques des granulés obtenus sont les suivantes :
- teneur en eau (en poids) = 22,4 %
- densité = 0,83 g/cm3
- diamètre médian = 1 mm
- 99 % en poids du produit se dissout en 370 s (solution aqueuse à 35 g/l à 20° C)
- résistance à l'attrition = 2 %

La granulation en assiette permet d'augmenter la granulométrie moyenne des particules et favorise une diffusion homogène de l'eau au sein des grains.

Ceci explique en partie le gain enregistré sur la vitesse de dissolution entre la poudre fine d'alimentation et le produit fini de granulométrie élevée.

## EXEMPLE 6

Une diminution de la concentration de la solution pulvérisée permet dans les conditions de préparation décrites dans l'exemple 1 de contrôler la granulométrie des granulés. Les résultats suivants ont été obtenus :

| | | |
|---|---|---|
| Extrait sec de la solution (% en poids) | 35 | 45 |
| % refus à 1 mm | 5 | 60 |
| Diamètre médian (mm) | 0,55 | 1,1 |
| % passant à 0,2 mm | 4 | 0 |
| Teneur en eau (% en poids) | 20 | 22,2 |

les autres caractéristiques des granulés restant par ailleurs les mêmes.

## Revendications

1 - Procédé de préparation de granulés sphériques de silicates hydratés de métaux alcalins par granulation de particules de silicates hydratés de métaux alcalins par pulvérisation d'eau ou d'une solution aqueuse de silicates de métaux alcalins sur un lit roulant desdites particules, puis séchage, ledit procédé étant caractérisé en ce que :
- l'opération de pulvérisation est réalisée sur des particules défilant en couche mince à température ambiante dans un dispositif rotatif du type assiette tournante dont l'axe de rotation est incliné par rapport à l'horizontale selon un angle supérieur à 20 °, la vitesse de défilement des particules, l'épaisseur de la couche mince de particules en défilement et le débit d'eau ou de solution pulvérisée étant tels que chaque particule se transforme en un granulé plastique en entrant en contact avec d'autres particules,
- l'opération de granulation par pulvérisation est éventuellement suivie, et ce avant séchage, d'une opération de densification à température ambiante.

2 - Procédé selon la revendication 1 caractérisé en ce que la solution aqueuse de silicate pulvérisée présente une concentration de l'ordre de 0 à 55 % en poids d'un silicate de métal alcalin présentant un rapport molaire $SiO_2/M_2O$ allant de 1,6/1 à 5/1.

3 - Procédé selon la revendication 2 caractérisé en ce que la solution aqueuse de silicate pulvérisée présente une concentration de l'ordre de 30 à 45 % en poids d'un silicate de métal alcalin présentant un rapport molaire $SiO_2/M_2O$ allant de 1,8/1 à 3,5/1.

4 - Procédé selon la revendication 3 caractérisé en ce que le rapport molaire $SiO_2/M_2O$ est voisin de 2/1.

5 - Procédé selon l'une quelconque des revendications 1 à 4 caractérisé en ce que la pulvérisation de l'eau ou de la solution de silicate est réalisée à une température de l'ordre de 20 à 95°C.

6 - Procédé selon la revendication 5 caractérisé en ce que la pulvérisation de l'eau ou de la solution de silicate est réalisée à une température de l'ordre de 70 à 95°C.

7 - Procédé selon l'une quelconque des revendications précédentes caractérisé en ce que la quantité d'eau ou de solution à pulvériser correspond au rapport débit de liquide/débit des particules entrant dans le dispositif du type assiette tournante pouvant aller de 0,1 à 0,6 l/kg.

8 - Procédé selon la revendication 7 caractérisé en ce que la quantité d'eau ou de solution à pulvériser correspond au rapport débit de liquide/débit des particules entrant dans le dispositif du type assiette tournante pouvant aller de 0,15 à 0,25 l/kg.

**9 -** Procédé selon l'une quelconque des revendications précédentes caractérisé en ce que les particules de silicate hydraté de métal alcalin mises en oeuvre pour préparer les granulés présentent :

– un rapport molaire $SiO_2/M_2O$ de l'ordre de 1,6/1 à 5/1,

– une teneur en eau de 15 à 30 % en poids,

– une densité de remplissage non tassé de l'ordre de 0,3 à 1 g/cm$^3$, 50 % en poids desdites particules présentant un diamètre inférieur à 100 µm,

**10 -** Procédé selon la revendication 9 caractérisé en ce que les particules de silicate hydraté de métal alcalin mises en oeuvre pour préparer les granulés présentent :

– un rapport molaire $SiO_2/M_2O$ de l'ordre de 1,8/1 à 3,5/1

– une teneur en eau de l'ordre de 18 à 25 % en poids,

– une densité de remplissage non tassé de l'ordre de 0,4 à 0,8 g/cm$^3$; 50 % en poids desdites particules présentant un diamètre inférieur à 55 µm.

**11 -** Procédé selon la revendication 10 caractérisé en ce que le rapport molaire $SiO_2/M_2O$ est voisin de 2/1.

**12 -** Procédé selon l'une quelconque des revendications précédentes caractérisé en ce que le temps de séjour des particules dans le dispositif de granulation est de l'ordre de 15 à 40 minutes.

**13 -** Procédé selon l'une quelconque des revendications précédentes caractérisé en ce que le dispositif de granulation du type assiette tournante est un drageoir.

**14 -** Procédé selon l'une quelconque des revendications précédentes caractérisé en ce qu'une opération de densification est réalisée à température ambiante par roulement des granulés obtenus à l'étape de granulation dans un dispositif rotatif.

**15 -** Procédé selon la revendication 14 caractérisé en ce que l'opération de densification est réalisée dans un tambour rotatif.

**16 -** Procédé selon les revendications 13 et 14 caractérisé en que l'opération de granulation est réalisée dans un drageoir en escalier, la densification des granulés étant obtenue par roulement desdits granulés sur les dernières marches de l'appareil.

**17 -** Procédé selon l'une quelconque des revendications précédentes caractérisé en ce que les granulés obtenus à l'étape de granulation ou de densification sont séchés en lit fluidisé.

**18 -** Granulés de silicates hydratés de métaux alcalins caractérisés en ce qu'ils présentent :

– un rapport $SiO_2/M_2O$ de l'ordre de 1,6/1 à 5/1,

– une teneur en eau de l'ordre de 17 à 25 % en poids,

– une densité de remplissage non tassé de l'ordre de 0,6 à 1,2 g/cm$^3$,

– un diamètre médian de l'ordre de 0,2 à 3 mm, avec un écart type $\log_{10}$ de 0,02 à 0,2.

**19 -** Granulés selon la revendication 18 caractérisés en ce qu'ils présentent :

– un rapport $SiO_2/M_2O$ de l'ordre de 1,8/1 à 3,5/1 et tout particulièrement voisin de 2/1,

– une teneur en eau de l'ordre de 18 à 23 % en poids,

– une densité de remplissage non tassé de l'ordre de 0,8 à 1 g/cm$^3$,

– un diamètre médian de l'ordre de 0,5 à 1 mm, avec un écart type $\log_{10}$ de 0,05 à 0,1.

**20 -** Granulés de silicate hydraté de sodium caractérisés en ce qu'ils présentent :

– un rapport molaire $SiO_2/Na_2O$ de l'ordre de 1,8 à 2,4 et tout particulièrement de l'ordre de 2/1,

– une teneur en eau de 18 à 23 % en poids,

– une densité de remplissage non tassé de l'ordre de 0,8 à 1 g/cm$^3$,

– un diamètre médian de l'ordre de 0,4 à 1,4 mm, de préférence de l'ordre de 0,5 à 1 mm avec un écart type $\log_{10}$ de 0,05 à 0,1,

– une vitesse de dissolution à 90 % dans l'eau de l'ordre de 3 minutes et à 99 % de l'ordre de 4 minutes.

– une résistance à l'attrition de l'ordre de 1 à 6 %, de préférence de l'ordre de 1 à 3 %.

**21 -** Utilisation des granulés obtenus selon le procédé faisant l'objet de l'une quelconque des revendications 1 à 17 ou des granulés faisant l'objet de l'une quelconque des revendications 18 à 20 pour la confection des compositions détergentes.

**22 -** Utilisation des granulés faisant l'objet de la revendication 20 pour la confection de compostions détergentes pour lave-vaiselle.

Office européen
des brevets

**RAPPORT DE RECHERCHE EUROPEENNE**

Numero de la demande

EP 91 40 0277

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 100 700 (RHONE-POULENC CHIMIE DE BASE) <br> * page 6, lignes 6-19; page 7, ligne 16 - page 9, ligne 34 * <br> --- | 1,18-20 | C 01 B 33/32 <br> C 11 D 3/08 |
| A | GB-A-1 370 578 (ALLIED CHEMICALS CORP.) <br> * revendication 1, 24-31 * <br> --- | 1,18-20 | |
| A | GB-A-1 417 475 (STAUFFER CHEMICAL CO.) <br> * revendication 1; page 3, ligne 107 - page 4, ligne 81 * <br> --- | 1 | |
| A | EP-A-0 249 829 (HENKEL) <br> * revendication 1; page 3, ligne 27 - page 4, ligne 14 * <br> --- | 1 | |
| A | GB-A- 827 322 (KANPSACK-GRIESHEIM AG) <br> * revendication 1; page 1, lignes 55-79 * <br> --- | 1 | |
| A | DE-B-1 667 038 (FUJI DENKI) <br> * page 1, colonne gauche, lignes 19-68 * <br> ----- | 1 | **DOMAINES TECHNIQUES RECHERCHES (Int. Cl.5)** <br><br> C 01 B 33/32 <br> C 11 D 3/08 <br> B 01 J 2/14 |

Le présent rapport a été établi pour toutes les revendications

| Lieu de la recherche | Date d'achèvement de la recherche | Examinateur |
|---|---|---|
| BERLIN | 17-06-1991 | CLEMENT J.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................
& : membre de la même famille, document correspondant

EPO FORM 1503 03.82 (P0402)